# EUROPÄISCHE PATENTSCHRIFT

(11) **EP 0 479 758 B1**
(45) Veröffentlichungstag und Bekanntmachung des Hinweises auf die Patenterteilung: **07.12.1994**
(21) Anmeldenummer: 91890208.1
(22) Anmeldetag: 13.09.1991
(51) Int. Cl.: G01D 5/26

(54) **Gekapseltes Längenmesssystem**
Encapsulated length measuring system
Système encapsulé pour mesurer la longueur

(30) Priorität: 05.10.1990 AT 2014/90
(43) Veröffentlichungstag der Anmeldung: 08.04.1992
(73) Patentinhaber: RSF-Elektronik Gesellschaft m.b.H., A-5121 Tarsdorf 93 (AT)
(72) Erfinder: Rieder, Heinz, A-5110 Oberndorf (AT); Schwaiger, Max, A-5121 Ostermiething (AT)
(74) Vertreter: Hübscher, Helmut, Dipl.-Ing.

(56) Entgegenhaltungen:
- DE-C- 3 824 751
- Begriffe der Elektronik, Franzis-Verlag, München, 1989, S. 289, 290

## Beschreibung

Die Erfindung betrifft ein gekapseltes Längenmeßsystem, mit einem die Längsverstellung eines Meßfühlers über eine Meßstrecke erfassenden Meßgerät, das mit dem verstellbaren Meßfühler in einem hermetisch abgeschlossenen Gehäuse gekapselt ist, wobei eine Nachführeinrichtung zur berührungslosen Einstellung des Meßfühlers auf eine außerhalb des Gehäuses angeordnete und relativ zu diesem in Meßrichtung verstellbare Meßstelle, die durch Kennmerkmale definiert ist, vorgesehen ist.

Ein derartiges Längenmeßsystem ist aus der DE-A-38 24 751 bekannt. Der grundsätzliche Vorteil solcher Meßsysteme besteht darin, daß die empfindlichen Teile der Meßeinrichtung im Gehäuse vollkommen geschützt untergebracht werden können, so daß Beschädigungen und Störungen durch Verschmutzung, Feuchtigkeit, aggressive Medien usw. verhindert und so auch hochempfindliche Meßsysteme an gefährdeter Stelle einsetzbar werden. Vorzugsweise werden über das Meßgerät elektrische Meßsignale erzeugt, die über abgedichtet aus dem Gehäuse herausführbare Leitungen der weiteren Auswertung bzw. Anzeige zugeführt werden. Für die Nachführeinrichtung kann man eine oder mehrere dem Meßfühler und der Meßstelle wechselweise zugeordnete Sender-Empfängersysteme verwenden, die bei Abweichungen von einer definierten Ausrichtungsstellung entsprechende Signale erzeugen, die über eine Steuereinrichtung umgeformt und zur Antriebssteuerung des Meßfühlers verwendet werden. Dabei können Reibradantriebe über Schrittmotoren vorgesehen werden. Es sind optoelektronische, magnetische, induktive oder kapazitive Sender-Empfängerkombinationen bzw. Sensorsysteme aus einander zugeordneten und dem Grad der gegenseitigen Ausrichtung entsprechende Steuersignale erzeugenden Paaren bekannt, wobei ohne weiteres die Möglichkeit besteht, nur den einen Teil eines Paares als aktivierbaren Teil, d. h. als mit einer Energieversorgung, Beleuchtungseinrichtung und Empfängern ausgestatteten Teil auszuführen und den anderen als passiven Empfänger oder Reflektor auszubilden bzw. bei magnetischer Koppelung einen Teil des Sensorpaares als Dauermagnet auszubilden, der z. B. im anderen Teil ein von der Ausrichtungsstellung abhängiges Signal erzeugt. Angestrebt wird eine möglichst verzögerungsfreie Nachführung, so daß z. B. der Meßfühler ohne wesentliche Verzögerung der auf einem bewegten Maschinenteil an definierter Stelle vorgesehenen Meßstelle folgt. Bei optoelektronisch arbeitenden Sensorpaaren ist ein entsprechender Teil des Gehäuses für die verwendete Strahlung durchlässig auszubilden. Sinngemäß muß zumindest jeweils der im Verstellbereich des Meßfühlers liegende Teil des Gehäuses zwischen Meßfühler und Meßstelle für das Kopplungsmedium möglichst gleichmäßig durchlässig sein. Durch Verwendung mehrerer Sensorpaare läßt sich die Genauigkeit der Ausrichtung und die Schnelligkeit des Ansprechens der Nachführsteuereinrichtung erhöhen. Bei dem bekannten Längenmeßsystem der eingangs genannten Art ist innerhalb des hermetisch abgeschlossenen Gehäuses ein eine Meßteilung tragender Maßstab feststehend angeordnet und es ist eine Abtasteinheit für diesen Maßstab zur Erzeugung von Abtast- bzw. Meßsignalen vorgesehen, die mit Hilfe der Nachführeinrichtung entlang des feststehenden Maßstabes verstellbar ist. Zu diesem Zweck kann eine eigene mit Reibrädern od. dgl. innerhalb des Gehäuses abgestützte und mit einem Schrittmotor oder einem sonstigen Motor versehene Antriebseinheit nach Art eines Wägelchens verwendet werden, welches die Abtasteinheit über den Maßstab verstellt. Zur Erzeugung einer Anfahrbeschleunigung unter Überwindung der Massenträgheit sowie zur punktgenauen Ausrichtung der Abtasteinheit gegenüber der Meßstelle kann in eine Kupplung zwischen dem Wägelchen und der Abtasteinheit noch ein steuerbares Piezoelement eingeschaltet werden. Insgesamt gesehen wird somit ein relativ hoher Aufwand getrieben, um die Nachführsteuerung exakt zu verwirklichen und die bei diesem bekannten Längenmeßsystem zwangsweise auftretenden, relativ großen Massenkräfte zu überwinden.

Aufgabe der Erfindung ist die Schaffung eines Längenmeßsystems der eingangs genannten Art, bei dem der Gesamtaufbau vereinfacht wird, wobei trotzdem die Störungsanfälligkeit herabgesetzt und die mögliche Meßgenauigkeit erhöht wird.

Die gestellte Aufgabe wird dadurch gelöst, daß der Meßfühler an einem zwischen Endumlenk- oder Wickelrollen über die Länge der Meßstrecke reichenden Trum eines Bandes angebracht ist, das über die Nachführeinrichtung antreibbar ist.

Das Band kann ein Stahlband oder ein Zahnriemenband mit kleinster Zahnteilung sein. Durch die erfindungsgemäße Ausführung wird es nicht mehr notwendig, über die Meßlänge bewegten Teilen Antriebsenergie zuzuführen, sondern der Antrieb kann von gegenüber dem Gehäuse relativ feststehenden Teilen aus erfolgen, wobei nur mehr die die Ausrichtung bestimmenden Meßsignale zur Steuereinrichtung zu übertragen sind.

Im Rahmen der Erfindung können verschiedene konstruktive Lösungen gewählt werden. Zunächst kann man wahlweise das Band als endloses über Endumlenkrollen, von denen wenigstens eine angetrieben wird, geführtes Band ausbilden oder an beiden Enden des den Meßfühler führenden Bandtrumes antreibbare Wickelrollen vorsehen, mit deren Hilfe der Meßfühler hin- und herverstellt wird.

Zur Vermeidung einer verstellbaren Abtasteinrichtung können verschiedene Wege beschritten werden. Nach einer dieser Ausführungsformen ist das Band selbst mit einer Meßteilung versehen und innerhalb des Gehäuses über eine feststehende Ableseeinheit für diese Meßteilung geführt, wobei sowohl eine absolute Meßteilung als auch eine Inkrementalteilung vorgesehen werden kann und die Ablesung der Meßteilung ebenfalls nach allen geeigneten bekannten, z. B. optoelektronischen, kapazitiven, induktiven oder magnetischen Abtastprinzipien vor sich geht.

Nach einer anderen Ausgestaltung, bei der aber das Band zur Erhöhung der Meßgenauigkeit zusätzlich wie oben angegeben ausgebildet und über eine Abtasteinheit geführt sein kann, enthält eine als Teil der Nachführeinrichtung gesteuert antreibbare Antriebsrolle für das Band einen das Meßgerät bildenden Drehgeber oder treibt einen solchen Drehgeber an. Bei Verwendung eines Schrittmotors für den Antrieb des Bandes besteht auch die Möglichkeit, die die einzelnen Schritte des Antriebsmotors bestimmenden bei der Nachführung erzeugten Steuersignale zu zählen und drehrichtungsabhängig zu summieren, wobei durch Zählung aus der Anzahl der Schritte eine Berechnung des zurückgelegten Weges vorgenommen werden kann. Die äußere Ausgestaltung des Gehäuses sowie die Ausbildung der Meßstelle und des Meßfühlers ergibt sich aufgrund der jeweiligen Gegebenheiten.

Weitere Einzelheiten und Vorteile des Erfindungsgegenstandes entnimmt man der nachfolgenden Zeichnungsbeschreibung.

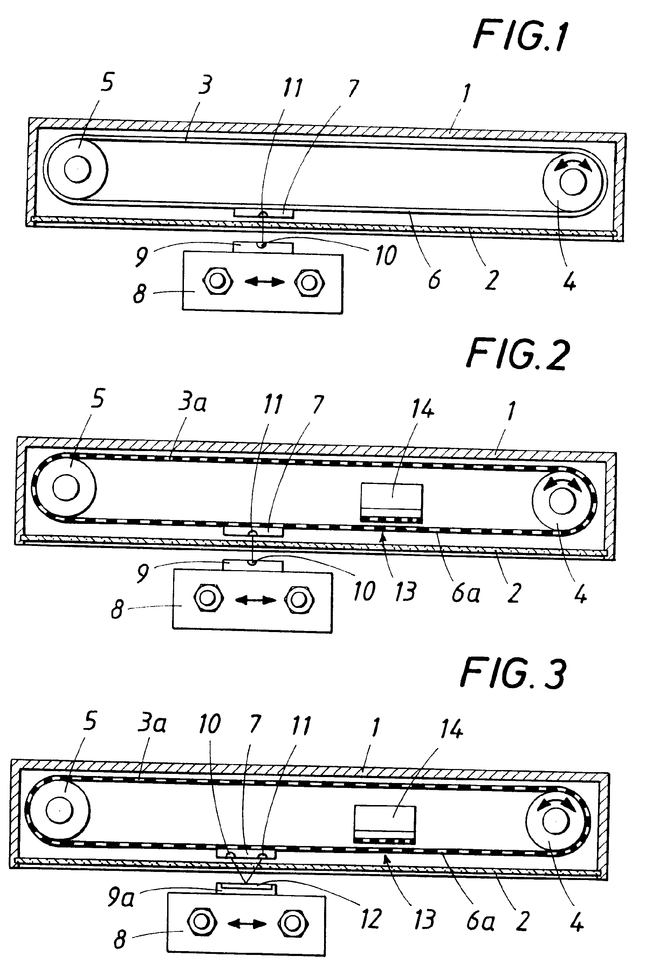

In den Fig. 1 bis 3 der Zeichnung sind beispielsweise und nicht einschränkend drei verschiedene Ausführungsformen eines erfindungsgemäßen Längenmeßsystem jeweils schematisch im Längsschnitt veranschaulicht.

Bei den Ausführungsbeispielen ist jeweils ein hermetisch abgeschlossenes Gehäuse 1 vorgesehen, das im Bereich einer Meßstrecke eine die Koppelung eines Senders mit einem Empfänger zulassende, bei optischer Koppelung z. B. aus lichtdurchlässigem Material hergestellte Wand 2 aufweist. Innerhalb des Gehäuses ist ein endloses Band 3 bzw. 3a zwischen einer Antriebsrolle 4 und einer Umlenkrolle 5 gespannt, wobei das über die Meßstrecke reichende Trum 6, 6a dieses Bandes einen Meßfühler 7 trägt.

Außerhalb des Gehäuses und vor der Wand 2 ist ein z. B. mit einem beweglichen Teil einer Werkzeugmaschine verbundener Körper 8 angeordnet, dessen Längsverstellung mit Hilfe eines Längenmeßsystems gemessen werden soll. Bei der Ausführung nach den Fig. 1 und 2 trägt der Körper 8 einen die Meßstelle 9 definierenden Sender 10 und am Meßfühler 7 ist ein zugeordneter Empfänger 11 vorgesehen. Nach Fig. 3 sind Empfänger und Sender 10, 11 am Meßfühler 7 angeordnet und die Meßstelle 9a ist durch einen Spiegel 12 definiert, wobei sich die Reflexion eines vom Empfänger 10 ausgegebenen Lichtstrahles oder -bündels sich in allen Fällen abhängig davon ändert, ob und in welchem Ausmaß eine Abweichung von einer Soll-Fluchtstellung des Meßfühlers und der Meßstelle auftritt. Eine (nicht dargestellte) Steuereinrichtung empfängt die in elektrische Signale umgewandelten Signale des Empfängers 11 und erzeugt Steuersignale für einen z. B. als Schrittmotor ausgebildeten Antriebsmotor der Antriebsrolle 4 so daß der Meßfühler im Sinne einer Nachführeinrichtung zwangsweise in die Sollstellung gegenüber der Meßstelle des bewegten Teiles 8 geführt wird.

Bei der Ausführungsform nach Fig. 1 ist die Antriebsrolle 4 selbst als Drehgeber ausgebildet oder mit einem Drehgeber gekuppelt, der die Verstellung des Meßfühlers 7 mißt und entsprechende Anzeige- bzw. Steuersignale ausgibt.

Bei der Ausführungsform nach den Fig. 2 und 3 ist das Band 3a selbst mit einer Meßteilung 13 versehen und wird an einer innerhalb des Gehäuses feststehend angebrachten Abtast- bzw. Ableseeinheit 14 vorbeigezogen, so daß aus dieser ebenfalls das Meßergebnis oder zum Meßergebnis führende Meß- oder Zählsignale ausgegeben werden können.

## Patentansprüche

1. Gekapseltes Längenmeßsystem, mit einem die Längsverstellung eines Meßfühlers über eine Meßstrecke erfassenden Meßgerät, das mit dem verstellbaren Meßfühler in einem hermetisch abgeschlossenen Gehäuse gekapselt ist, wobei eine Nachführeinrichtung zur berührungslosen Einstellung des Meßfühlers auf eine außerhalb des Gehäuses angeordnete und relativ zu diesem in Meßrichtung verstellbare Meßstelle, die durch Kennmerkmale definiert ist, vorgesehen ist, dadurch gekennzeichnet, daß der Meßfühler (7) an einem zwischen End- umlenk- oder Wickelrollen (4, 5) über die Länge der Meßstrecke reichenden Trum (6, 6a) eines Bandes (3, 3a) angebracht ist, das über die Nachführeinrichtung antreibbar ist.

2. Längenmeßsystem nach Anspruch 1, dadurch gekennzeichnet, daß das Band (3a) selbst mit einer Meßteilung versehen und innerhalb des Gehäuses (1) über eine feststehende Ableseeinheit (14) für diese Meßteilung (13) geführt ist.

3. Längenmeßsystem nach Anspruch 1 oder 2, dadurch gekennzeichnet, daß eine als Teil der Nachführeinrichtung gesteuert antreibbare Antriebsrolle (4) für das Band einen das Meßgerät bildenden Drehgeber enthält bzw. antreibt.

## Claims

1. An encased length measuring system, comprising a measuring device which detects the longitudinal movement of a measuring sensor over a measuring zone, the measuring device being encased with the movable measuring sensor in a hermetically sealed casing, a tracker system being provided for contactless adjustment of the measuring sensor with respect to a measuring location disposed outside the casing and movable relatively thereto in the direction of measurement, the said location being defined by identifying features, characterised in that the measuring sensor (7) is disposed on a run (6, 6a) of a belt (3, 3a), such run extending between end reversing or take-up rollers (4, 5) over the length of the measuring zone, said belt being drivable via the tracker system.

2. A length measuring system according to claim 1, characterised in that the belt (3a) is itself provided with a measuring scale and is passed, inside the casing (1), over a stationary reading unit (14) for said scale (13).

3. A length measuring system according to claim 1 or 2, characterised in that a belt drive roller (4) which is controllably drivable as part of the tracker system contains or drives a selsyn forming the measuring device.

## Revendications

1. Dispositif de mesure de longueur encapsulé, avec un appareil de mesure, appréhendant le déplacement longitudinal d'un capteur de mesure sur une distance de mesure et encapsulé, avec le capteur de mesure réglable, dans un boîtier isolé de façon hermétique, où est prévu un dispositif de poursuite destiné au réglage sans contact du capteur de mesure sur un point de mesure, disposé à l'extérieur du boîtier et réglable par rapport à celui-ci dans la direction de la mesure, point de mesure défini par des caractéristiques d'identification,
caractérisé en ce que le capteur de mesure (4, 5) est monté sur un tronçon (6, 6a) d'un ruban (3, 3a), allant entre des rouleaux de renvoi final ou d'enroulement (4,5 ), sur la longueur de la distance de mesure, et pouvant être entraîné par l'intermédiaire du dispositif de poursuite.

2. Dispositif selon la revendication 1,
caractérisé en ce que le ruban (3a) proprement dit est pourvu d'une graduation de mesure et est guidé à l'intérieur du boîtier (1), par l'intermédiaire d'une unité de lecture (14) fixe destinée à cette graduation de mesure (13)..

3. Dispositif selon la revendication 1 ou 2,
caractérisé en ce qu'un rouleau d'entraînement (4), destiné au ruban, faisant partie du dispositif de poursuite et pouvant être entraîné sous l'action d'une commande, contient, respectivement entraîne un capteur de rotation, constituant l'appareil de mesure.
